# EUROPÄISCHE PATENTSCHRIFT

(11) **EP 1 045 122 B1**
(45) Veröffentlichungstag und Bekanntmachung des Hinweises auf die Patenterteilung: **13.04.2005**
(21) Anmeldenummer: 00103768.8
(22) Anmeldetag: 23.02.2000
(51) Int. Cl.: F02D 31/00, B60K 31/00

(54) **Vorrichtung zur Drehzahlbegrenzung von Motoren und/oder Geschwindigkeitsbegrenzung von motorbetriebenen Kraftfahrzeugen**
Apparatus for limiting the revolutions of engines and/or speed of engine driven vehicle
Dispositif pour limiter la vitesse d'un moteur et/ou la vitesse d'un vehicule à moteur

(30) Priorität: 13.04.1999 DE 19916491; 10.06.1999 DE 19926351
(43) Veröffentlichungstag der Anmeldung: 18.10.2000
(73) Patentinhaber: DaimlerChrysler AG, 70567 Stuttgart (DE)
(72) Erfinder: Kreischer, Thomas, 71332 Waiblingen (DE); Weckenmann, Hartmut, 70619 Stuttgart (DE)

(56) Entgegenhaltungen:
- EP-A- 0 754 587
- DE-A- 4 327 654
- DE-A- 19 506 082
- US-A- 4 217 867
- US-A- 5 665 026
- PATENT ABSTRACTS OF JAPAN vol. 013, no. 434 (M-875), 28. September 1989 (1989-09-28) & JP 01 167440 A (MAZDA MOTOR CORP), 3. Juli 1989 (1989-07-03)
- PATENT ABSTRACTS OF JAPAN vol. 012, no. 347 (M-743), 19. September 1988 (1988-09-19) & JP 63 109264 A (HONDA MOTOR CO LTD), 13. Mai 1988 (1988-05-13)

## Beschreibung

Die Erfindung betrifft eine Vorrichtung für Drehzahlbegrenzung von Motoren und/oder zur Geschwindigkeitsbegrenzung von motorbetriebenen Kraftfahrzeugen, mit einem Regler, der die Motordrehzahl auf eine applizierte zulässige Höchstdrehzahl einregelt bzw. auf eine Drehzahl einregelt, die einer applizierten zulässigen Höchstgeschwindigkeit entspricht.

Bei aktuellen Serienfahrzeugen erfolgt die Drehzahlbegrenzung durch Kraftstoffausblendung, d.h., bei Überschreiten der vorgegebenen höchstzulässigen Drehzahlgrenze erfolgt die Abschaltung einzelner Zylinder. Die Nachteile der bekannten Drehzahlbegrenzung bestehen darin, daß keine Ausgabe eines definierten Ist-Drehmoments an externe Steuergeräte möglich ist. Da beim Einsetzen der Drehzahlbegrenzung keine Verbrennung im stöchiometrischen Verhältnis mehr möglich ist, verschlechtern sich die Abgaswerte. Weiterhin erfolgen beim Abschalten und Einsetzen der Einspritzung bekannter Drehzahlbegrenzungen starke Drehmomentsprünge, was zu einer starken Komforteinbuße führt.

Aus der DE 39 37 846 A1 ist eine Vorrichtung zur Drehzahlbegrenzung von Motoren mit einem Regler bekannt, dem in Abhängigkeit der Differenz zwischen einem Drehzahl-Istwert als Regelgröße und einem Drehzahlgrenzwert ein Drehmoment-Sollwert (Lastdrehmoment) als Stellgröße vorgegeben wird. Weiterhin sind aus der DE 43 27 654 A1 oder der DE 44 34 022 A1 Vorrichtungen zur Geschwindigkeitsbegrenzung von motorbetriebenen Kraftfahrzeugen mit einem Regler bekannt, der entsprechend in Abhängigkeit der Differenz zwischen einem Geschwindigkeits-Istwert als Regelgröße und einem Geschwindigkeitsgrenzwert nach einem Drehmoment-Sollwert für den Motor des Kraftfahrzeugs als Stellgröße vorgibt. Durch diese bekannten Vorrichtungen wird zwar gegenüber einer Zylinderabschaltung ein besserer Komfort erzielt, jedoch müssen zum einen Nachteile mit den Abgaswerten in Kauf genommen werden und zum anderen hat sich der erreichte Komfort als immer noch nicht ausreichend erwiesen.

Eine Aufgabe der vorliegenden Erfindung besteht darin, eine Vorrichtung zur Drehzahlbegrenzung und/oder Geschwindigkeitsbegrenzung zu schaffen, die gegenüber herkömmlichen Vorrichtungen komfortabler bei besseren. Abgaswerten arbeitet, und unabhängig vom verwendeten Motortyp einsetzbar ist

Diese Aufgabe wird erfindungsgemäß durch die Merkmale des Anspruchs 1 und/oder des Anspruchs 2 gelöst.

Bei der erfindungsgemäßen momentenbasierten Drehzahlbegrenzung bzw. Geschwindigkeitsbegrenzung ist der Regler in vorteilhafter Weise mit Mitteln zur Vorgabe des Drehmoment-Sollwerts in Abhängigkeit des Gradienten der Regelgröße versehen. Vorzugsweise sind dabei weiterhin Mittel zur Bildung eines Reduktions-Drehmoments in Abhängigkeit des Gradienten der Regelgröße und des Drehmoment-Istwerts, insbesondere mittels eines Kennfeldes vorgesehen. Eine Subtrahierstufe dient dann zur Bildung eines Vorhalte-Drehmoments aus der Differenz zwischen Reduktions-Drehmoment und Drehmoment-Istwert. Diese steht mit dem Regler in Wirkverbindung zur Vorgabe des Drehmoment-Sollwerts in Abhängigkeit dieses Vorhalte-Drehmoments. Die Beeinflussung des Drehmoment-Sollwerts durch den Gradienten der Regelgröße, also Drehzahl-Istwert und/oder Geschwindigkeits-Istwert, insbesondere durch das erfindungsgemäß gebildete Vorhalte-Drehmoment, trägt erheblich zum Komfortgewinn bei und ermöglicht eine sanfte Begrenzung. Die Verbrennungsvorgänge erfolgen im stöchiometrischen Verhältnis (Lambda = 1), so daß auch während der Drehzahlbegrenzung gute Abgaswerte beibehalten werden. Drehmomentsprünge werden verhindert, was zu einem erheblichen Komfortgewinn für den Fahrer eines Kraftfahrzeugs führt.

Durch die in den Unteransprüchen aufgeführten Maßnahmen sind vorteilhafte Weiterbildungen und Verbesserungen der in den Ansprüchen 1 und 2 angegebenen Vorrichtung möglich.

In vorteilhafter Weise ist eine Grenzfunktions-Stufe zur Bildung der Drehzahl-Grenzfunktion bei Überschreiten einer maximalen Dauerdrehzahl durch den Drehzahl-Istwert vorgesehen. Diese Grenzfunktions-Stufe besitzt vorzugsweise ein Zeitglied zur Vorgabe einer über der maximalen Dauerdrehzahl liegenden Maximaldrehzahl für eine festlegbare Zeitdauer, wobei dann ein Rampengenerator zur Rückführung der Maximaldrehzahl nach Ablauf der festlegbaren Zeitdauer auf die maximale Dauerdrehzahl vorgesehen ist. Dieses kurzzeitige Zulassen einer Überschreitung der maximalen Dauerdrehzahl führt ebenfalls zur Vermeidung von Drehmoment-Stößen bei, da hierdurch unter Vermeidung solcher Drehmoment-Stöße ein sanftes Rückführen auf die maximale Dauerdrehzahl möglich ist. Diese Grenzfunktions-Stufe verhindert somit selbst dann unkomfortable Stöße, wenn in Folge eines starken Drehmoment-Anstiegs die maximale Dauerdrehzahl überschritten wird.

Eine Subtrahierstufe ist zweckmäßigerweise zur Bildung der Differenz zwischen der Drehzahl-Grenzfunktion oder des Drehzahl-Grenzwerts und dem Drehzahl-Istwert vorgesehen, wobei diese Differenz einem Eingang des Reglers zuführbar ist.

Um unnötige Regelvorgänge zu verhindern und den Regler zu entlasten, ist in vorteilhafter Weise eine Logik-Stufe zur Bildung eines Vorhalte-Werts in Abhängigkeit des Gradients der Regelgröße und des Grenzwerts oder der Grenzfunktion vorgesehen, wobei eine erste Vergleichsstufe bei Überschreiten dieses Vorhalte-Werts durch die Regelgröße den Regler aktiviert und/oder beim Unterschreiten deaktiviert. Dies bedeutet, daß der Regler um so früher aktiviert wird, je größer der (positive) Gradient der Drehzahl bzw. der Geschwindigkeit ist. Durch diese Abhängigkeit vom Gradienten wird der Regler in optimaler Weise dann eingesetzt bzw. aktiviert, wenn es erforderlich ist, um eine Überschreitung vorgegebener Grenzwerte zu verhindern.

Die Logik-Stufe kann auch zweckmäßigerweise wenigstens eine zweite Vergleichsstufe aufweisen, die bei Unterschreiten eines unter dem Vorhalte-Wert liegenden Festwerts durch die Regelgröße den Regler deaktiviert. Hierdurch wird ein sicheres Abschalten des Reglers gewährleistet, wenn der Abstand der Regelgröße vom Grenzwert ausreichend groß geworden ist.

Für die Drehzahl- bzw. Geschwindigkeitsbegrenzung eignet sich vor allem im wesentlichen als PI-Regler ausgebildeter Regler.

Dabei ist der als Stellgröße gebildete Drehmoment-Sollwert insbesondere zum Eingriff auf Einrichtungen zur Steuerung der Regelung der Luft- und/oder Kraftstoffzufuhr zum Motor vorgesehen, wobei sich ein Eingriff auf die Luftzufuhr als besonders günstig herausgestellt hat. Bei einem solchen Eingriff erfolgen die Verbrennungsvorgänge (im wesentlichen) im stöchiometrischen Verhältnis (Lambda = 1).

Ein Ausführungsbeispiel der Erfindung ist in der Zeichnung dargestellt und in der nachfolgenden Beschreibung näher erläutert. Es zeigen:
- Figur 1: ein Blockschaltbild einer Vorrichtung zur Drehzahlbegrenzung von Motoren als Ausführungsbeispiel der Erfindung,
- Figur 2: eine detailliertere Darstellung der in Figur 1 dargestellten Grenzfunktions-Stufe,
- Figur 3: ein Signaldiagramm zur Erläuterung der Wirkungsweise der Grenzfunktions-Stufe und
- Figur 4: eine detailliertere Darstellung der in Figur 1 dargestellten Logik-Stufe.

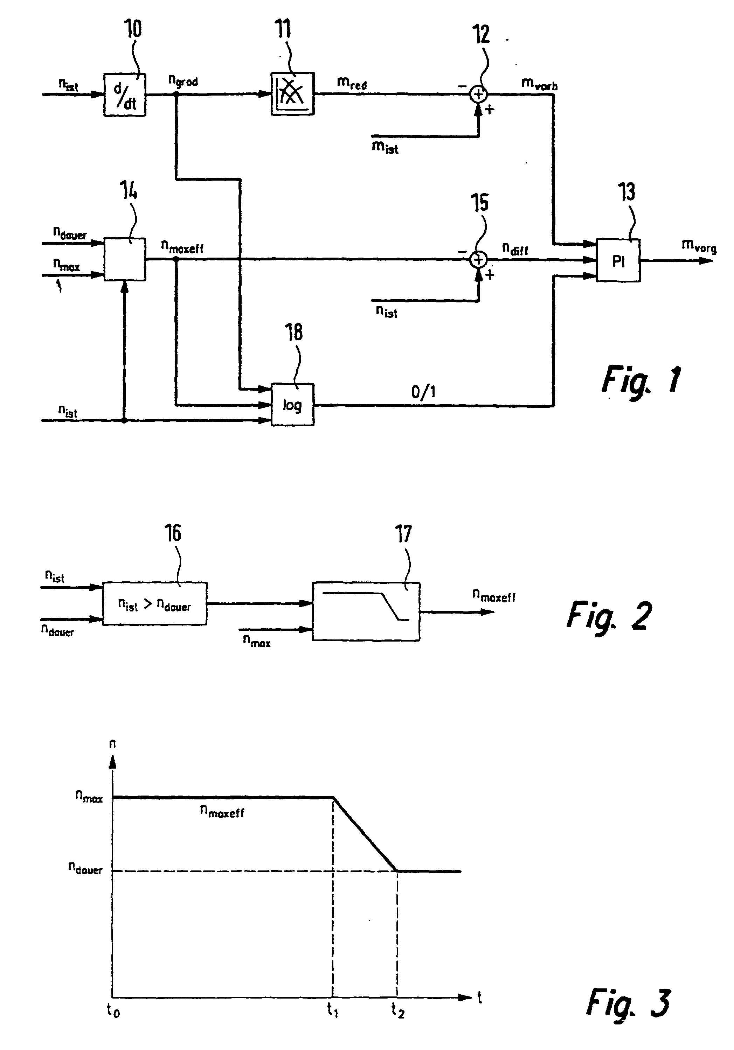

Bei dem in Figur 1 dargestellten Ausführungsbeispiel wird der mittels eines üblichen Drehzahlsensors erfaßte Drehzahl-Istwert nᵢₛₜ einer Brennkraftmaschine eines Kraftfahrzeugs einer Gradientenstufe 10 zugeführt, um einen Drehzahl-Gradienten n_{grad} zu bilden. Mittels eines Kennfelds 11 wird dann in Abhängigkeit dieses Drehzahl-Gradienten n_{grad} und eines Drehmoment-Istwerts mᵢₛₜ der Brennkraftmaschine ein Reduktions-Drehmoment m_{red} gebildet. Der Drehmoment-Istwert mᵢₛₜ wird dabei üblicherweise rechnerisch z.B. aus dem Luftmassenstrom und der Motordrehzahl oder der zugeführten Kraftstoffmenge und der Motordrehzahl gebildet. Je größer der Drehzahl-Gradient n_{grad} ist, desto größer wird das Reduktions-Drehmoment m_{red}. Je schneller also sich der Drehzahl-Istwert nᵢₛₜ dem Grenzwert nähert, desto größer muß die Reduzierung des Drehmoments sein, um ein Überschreiten dieser Drehzahlschwelle zu verhindern.

In einer nachfolgenden Subtrahierstufe 12 wird dann dieses Reduktions-Drehmoment m_{red} vom Drehmoment-Istwert mᵢₛₜ abgezogen, und man erhält ein Vorhalte-Drehmoment mᵥₒᵣₕ, das einem PI-Regler 13 zugeführt wird. Dieses Vorhalte-Drehmoment mᵥₒᵣₕ beeinflußt daher den Regler 13 dahingehend, daß die ausgegebene Stellgröße, nämlich der Drehmoment-Sollwert m_{vorg} nicht nur von der Regelabweichung abhängt, sondern zusätzlich vom Drehzahl-Gradienten n_{grad}. Dies heißt, daß nicht nur die Regelabweichung, sondern auch dieses Vorhalte-Drehmoment mᵥₒᵣₕ auf den Drehmoment-Sollwert m_{vorg} dahingehend einwirkt, daß dieser verkleinert wird, je größer der Drehzahl-Gradient n_{grad} ist.

Eine Grenzfunktions-Stufe 14 dient zur Ermittlung der aktuellen Abregeldrehzahl n_{maxeff} zur weichen Drehzahlbegrenzung. Diese Abregeldrehzahl n_{maxeff} wird in Abhängigkeit der maximalen Dauerdrehzahl n_{dauer}, der Maximaldrehzahl nₘₐₓ und dem Drehzahl-Istwert nᵢₛₜ gebildet, wie dies im Zusammenhang mit den Figuren 2 und 3 noch näher erläutert wird. n_{dauer} und nₘₐₓ sind feste Größen, die bei jedem Typ von Brennkraftmaschine individuell festgelegt werden.

Eine nachgeschaltete Subtrahierstufe 15 bildet den Differenzwert n_{diff} zwischen dem Drehzahl-Istwert nᵢₛₜ und der in der Grenzfunktions-Stufe 14 gebildeten Abregeldrehzahl n_{maxeff}. Dieser Wert wird als Regelgröße dem Regler 13 zugeführt, der durch entsprechende Reduzierung des Drehmoment-Sollwerts m_{vorg} diesen Differenzwert n_{diff} auf den Wert Null zurückführt. Dies bedeutet, daß bei einer Überschreitung der maximalen Dauerdrehzahl n_{dauer} die Drehzahl sanft wieder auf diesen Wert der Dauerdrehzahl n_{dauer} rückgeführt wird. Dies wird im folgenden anhand der Figuren 2 und 3 erläutert.

Die Grenzfunktions-Stufe 14 wird erst dann aktiviert, wenn der Drehzahl-Istwert nᵢₛₜ die maximale Dauerdrehzahl n_{dauer} überschreitet. Diese Initialisierung erfolgt mittels einer Vergleichsstufe 16. In einem nachgeschalteten Funktionsgenerator 18, dem die Maximaldrehzahl nₘₐₓ als Wert vorliegt, wird nun die in Figur 3 dargestellte Grenzfunktion gebildet. Nach der Initialisierung zum Zeitpunkt t₀ wird zunächst der Wert der Maximaldrehzahl nₘₐₓ für eine festlegbare Zeitdauer t1 vorgegeben. Anschließend wird dieser Wert mittels eines Rampengenerators über eine Rampe auf den Wert der maximalen Dauerdrehzahl n_{dauer} rückgeführt. Mittels dieser Funktion für die Abregeldrehzahl n_{maxeff} wird somit bei Überschreiten der maximalen Dauerdrehzahl n_{dauer} der Drehzahl-Istwert nᵢₛₜ sanft mittels einer Rampe auf diesen Wert der maximalen Dauerdrehzahl n_{dauer} geregelt zurückgeführt, was durch den Regler 13 erfolgt. Ist die Dauerdrehzahl n_{dauer} erreicht, bleibt die Abregeldrehzahl n_{maxeff} auf diesem Wert stehen und kann erst wieder kurzzeitig auf den Wert der Maximaldrehzahl nₘₐₓ gesetzt werden, wenn ein vorgegebener Reset-Wert unterschritten wird und der Regler 13 nicht mehr im Durchgriff ist. Erst dann kann ein erneuter Zyklus mittels der Vergleichsstufe 16 durchlaufen werden.

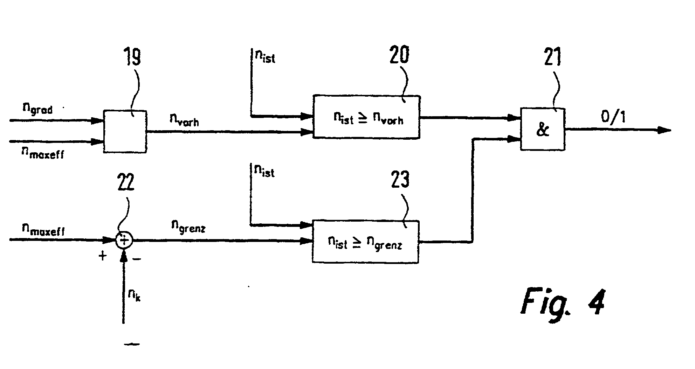

Eine Logik-Stufe 18 dient zum Aktivieren(Ausgangssignal 1)und Deaktivieren (Ausgangssignal 0) des Reglers 13 in Abhängigkeit des Drehzahl-Gradienten n_{grad}, der Abregeldrehzahl n_{maxeff} und des Drehzahl-Istwerts nᵢₛₜ. Diese Logik-Stufe 18 ist in Figur 4 detaillierter dargestellt und wird anhand von Figur 4 im folgenden erläutert.

Wesentlich ist die Ermittlung einer Drehzahl-Gradienten abhängigen Drehzahl-Vorhalteschwelle n_{vorg}. Diese wird in einer Funktionsstufe 19 in Abhängigkeit des Drehzahl-Gradienten n_{grad} und der Abregeldrehzahl n_{maxeff} gebildet. In einer nachfolgenden Vergleichsstufe 20 wird geprüft, ob der Drehzahl-Istwert nᵢₛₜ diese Drehzahl-Vorhalteschwelle nᵥₒᵣₕ erreicht oder überschreitet. In diesem Falle erfolgt eine Aktivierung des Reglers 13 mittels eines Vorhalt-Bits über eine UND-Stufe 21. Hierdurch wird erreicht, daß der Regler 13 um so früher, d.h. bei um so niedrigeren Drehzahl-Istwerten aktiviert wird, je größer der Drehzahl-Gradient ist.

Fällt der Drehzahl-Istwert unter eine applizierbare Abschaltschwelle n_{grenz}, die unterhalb der Vorhalteschwelle nᵥₒᵣₕ liegt, so wird der Regler 13 deaktiviert. Diese Abschaltschwelle n_{grenz} wird als Differenz zwischen der Abregeldrehzahl n_{maxeff} und einem Festwert nₖ in einer Subtrahierstufe 22 gebildet. Selbstverständlich könnte man diese Abschaltschwelle n_{grenz} auch direkt als Festwert vorgeben. In einer nachgeschalteten Vergleichsstufe 23 wird nun geprüft, ob der Drehzahl-Istwert nᵢₛₜ gleich oder oberhalb dieser Abschaltschwelle n_{grenz} liegt. In diesem Falle ist die UND-Stufe 21 durchgängig für Signale der Vergleichsstufe 20. Im anderen Falle wird die UND-Stufe 21 gesperrt und der Regler 13 dadurch abgeschaltet bzw. deaktiviert.

Diese Deaktivierung oder direkte Abschaltung des Reglers 13 kann ohne weitere Nebenbedingungen erfolgen, jedoch können zur Deaktivierung auch weitere Bedingungen erfüllt sein, z.B. kann die Deaktivierung erst dann vollzogen werden, wenn das Reglermoment keinen Durchgriff mehr erhält. Bei einer Abschaltung mit mehreren Nebenbedingungen können mehrere derartiger Linien mit Vergleichsstufen vorliegen, um stufenweise eine Deaktivierung bzw. Aktivierung des Reglers 13 zu bewirken.

Der in Figur 1 als PI-Regler ausgewiesene Regler 13 kann prinzipiell auch eine andere Reglercharakteristik aufweisen, z.B. P-, I-, PID- oder dergleichen. In Abhängigkeit von Reglervorgaben können auch einzelne Regleranteile aktiviert oder deaktiviert werden.

Das anhand der Figuren 1 bis 4 beschriebene Ausführungsbeispiel betrifft eine Vorrichtung zur Drehzahlbegrenzung von Motoren. Entsprechend kann jedoch auch eine Vorrichtung zur Geschwindigkeitsbegrenzung von motorbetriebenen Kraftfahrzeugen realisiert werden, wobei dann jeweils Drehzahlgrößen durch Geschwindigkeitsgrößen zu ersetzen sind. Wesentlich ist es dabei, daß auch im Falle Geschwindigkeitsbegrenzung der Regler 13 einen Drehmoment-Sollwert für den Motor des Kraftfahrzeugs als Stellgröße vorgibt. Auch eine kombinierte Vorrichtung zur Drehzahlbegrenzung und Geschwindigkeitsbegrenzung kann entsprechend realisiert werden, wobei in diesem Falle dem kleineren Vorgabemoment m_{vorg} bei sich widerstreitenden Vorgaben der Vorrang einzuräumen ist.

Der vom Regler als Stellgröße gebildete Drehmoment-Sollwert m_{vorg} wirkt beispielsweise auf eine Stellvorrichtung für die Drosselklappe einer Brennkraftmaschine ein, wirkt also auf die Luftzuführung der Brennkraftmaschine ein, was eine bevorzugte Lösung darstellt. Alternativ hierzu könnte auch auf die Kraftstoffzuführung eingewirkt werden, was insbesondere im Falle eines Dieselmotors die sinnvollste Lösung darstellen dürfte. Ein kombinierter Eingriff ist ebenfalls möglich.

Die Erfindung ist jedoch nicht auf die Drehzahlbegrenzung von Brennkraftmaschinen bzw. auf die Geschwindigkeitsbegrenzung von brennkraftbetriebenen Kraftfahrzeugen beschränkt, sondern sie kann auch auf andere Motorarten, wie z.B. Elektromotoren angewandt werden. Im Falle eines Elektromotors wirkt der Drehmoment-Sollwert n_{vorg} als Stellgröße beispielsweise über eine Steuerelektronik auf die Strom- und/oder Spannungsversorgung des Elektromotors ein.

## Patentansprüche

1. Vorrichtung zur Drehzahlbegrenzung von Motoren, mit einem Regler (13), der in Abhängigkeit der Differenz (n_{diff}) zwischen einem Drehzahl-Istwert (nᵢₛₜ) als Regelgröße und einem Drehzahlgrenzwert oder einer Drehzahl-Grenzfunktion (n_{maxeff}) einen Drehmoment-Sollwert (m_{vorg}) für den Motor als Stellgröße vorgibt, **dadurch gekennzeichnet, daß** der Regler (13) mit Mitteln (10 - 12) zur Vorgabe des Drehmoment-Sollwerts (m_{vorg}) in Abhängigkeit des Gradienten (n_{grad}) der Regelgröße (nᵢₛₜ) versehen ist, daß Mittel (11) zur Bildung eines Reduktions-Drehmoments (m_{red}) in Abhängigkeit des Gradienten (n_{grad}) der Regelgröße (nᵢₛₜ) und des Drehmoment-Istwerts (mᵢₛₜ), vorgesehen sind und daß eine Subtrahierstufe (12) zur Bildung eines Vorhalte-Drehmoments (mᵥₒᵣₕ) aus der Differenz zwischen Reduktions-Drehmoment (m_{red}) und Drehmoment-Istwert (mᵢₛₜ) mit dem Regler (13) in Wirkverbindung steht zur Vorgabe des Drehmoment-Sollwerts (m_{vorg}) in Abhängigkeit des Vorhalte-Drehmoments (mᵥₒᵣₕ).

2. Vorrichtung zur Geschwindigkeitsbegrenzung von motorbetriebenen Kraftfahrzeugen, mit einem Regler (13), der in Abhängigkeit der Differenz zwischen einem Geschwindigkeits-Istwert als Regelgröße und einem Geschwindigkeitsgrenzwert oder einer Geschwindigkeits-Grenzfunktion einen Drehmoment-Sollwert (m_{vorg}) für den Motor des Kraftfahrzeugs als Stellgröße vorgibt, **dadurch gekennzeichnet, daß** der Regler (13) mit Mitteln (10 - 12) zur Vorgabe des Drehmoment-Sollwerts (m_{vorg}) für den Motor des Kraftfahrzeugs als Stellgröße vorgibt, daß Mittel (11) zur Bildung eines Reduktions-Drehmoments (m_{red}) in Abhängigkeit des Gradienten (n_{grad}) der Regelgröße (nᵢₛₜ) und des Drehmoment-Istwerts (mᵢₛₜ), vorgesehen sind, und daß eine Subtrahierstufe (12) zur Bildung eines Vorhalte-Drehmoments (mᵥₒᵣₙ) aus der Differenz zwischen Reduktions-Drehmoment (m_{red}) und Drehmoment-Istwert (mᵢₛₜ) mit dem Regler (13) in Wirkverbindung steht zur Vorgabe des Drehmoment-Sollwerts (m_{vorg}) in Abhängigkeit des Vorhalte-Drehmoments (mᵥₒᵣₕ).

3. Vorrichtung nach Anspruch 1 oder 2, **dadurch gekennzeichnet, daß** ein Kennfeld zur Bildung des Reduktions-Drehmoments (m_{red}) vorgesehen ist.

4. Vorrichtung nach einem der vorhergehenden Ansprüche, **dadurch gekennzeichnet, daß** eine Grenzfunktions-Stufe (14) zur Bildung der Drehzahl-Grenzfunktion (n_{maxeff}) bei Überschreiten einer maximalen Dauerdrehzahl (n_{dauer}) durch den Drehzahl-Istwert (nᵢₛₜ) vorgesehen ist.

5. Vorrichtung nach Anspruch 4, **dadurch gekennzeichnet, daß** die Grenzfunktions-Stufe (14) ein Zeitglied zur Vorgabe eines über der maximalen Dauerdrehzahl (n_{dauer}) liegenden Maximaldrehzahl (nₘₐₓ) für eine festlegbare Zeitdauer (t1) aufweist, und daß ein Rampengenerator zur Rückführung der Maximaldrehzahl (nₘₐₓ) nach Ablauf der festlegbaren Zeitdauer (t1) auf die maximale Dauerdrehzahl (n_{dauer}) vorgesehen ist.

6. Vorrichtung nach Anspruch 4 oder 5, **dadurch gekennzeichnet, daß** die Drehzahl-Grenzfunktion (n_{maxeff}) als Abregeldrehzahl ausgebildet ist.

7. Vorrichtung nach einem der Ansprüche 4 bis 6, **dadurch gekennzeichnet, daß** eine Subtrahierstufe (15) zur Bildung der Differenz (n_{diff}) zwischen der Drehzahl-Grenzfunktion (n_{maxeff}) oder dem Drehzahl-Grenzwert und dem Drehzahl-Istwert (nᵢₛₜ) vorgesehen ist, wobei diese Differenz (n_{diff}) einem Eingang des Reglers (13) zuführbar ist.

8. Vorrichtung nach einem der vorhergehenden Ansprüche, **dadurch gekennzeichnet, daß** eine Logikstufe (18) zur Bildung eines Vorhalte-Werts in Abhängigkeit des Gradients (n_{grad}) der Regelgröße (nᵢₛₜ) und des Grenzwerts oder der Grenzfunktion (n_{maxeff}) vorgesehen ist, wobei eine erste Vergleichsstufe (20) bei Überschreiten dieses Vorhalte-Werts (nᵥₒᵣₕ) durch die Regelgröße (nᵢₛₜ) den Regler (13) aktiviert und/oder bei Unterschreiten deaktiviert.

9. Vorrichtung nach Anspruch 8, **dadurch gekennzeichnet, daß** die Logik-Stufe (18) wenigstens eine zweite Vergleichsstufe (23) aufweist, die bei Unterschreiten eines unter dem Vorhalte-Wert (nᵥₒᵣₕ) liegenden Werts (n_{grenz}) durch die Regelgröße (nᵢₛₜ) den Regler (13) deaktiviert.

10. Vorrichtung nach einem der vorhergehenden Ansprüche, **dadurch gekennzeichnet, daß** der Regler (13) im wesentlichen als PI-Regler ausgebildet ist.

11. Vorrichtung nach einem der vorhergehenden Ansprüche, **dadurch gekennzeichnet, daß** der als Stellgröße ausgebildete Drehmoment-Sollwert (m_{vorg}) zum Eingriff auf Einrichtungen zur Steuerung oder Regelung der Luft- und/oder Kraftstoffzufuhr zum Motor vorgesehen ist.

12. Vorrichtung nach Anspruch 11, **dadurch gekennzeichnet, daß** beim Eingriff die Verbrennungsvorgänge im wesentlichen im stöchiometrischen Verhältnis d.h Lambda = 1, erfolgen.

## Claims

1. Device for limiting the running speed of engines, with a regulator (13) which generates a nominal torque value (m_{vorg}) for the engine as a controlling magnitude that depends on the difference (n_{diff}) between an actual speed value (nᵢₛₜ) as the controlled magnitude and a limiting speed value or limiting speed function (n_{maxeff}), **characterised in that** the regulator (13) is provided with means (10 - 12) for generating the nominal torque value (m_{vorg}) as a function of the gradient (n_{grad}) of the controlled magnitude (nᵢₛₜ), means (11) being provided for determining a reduction torque (m_{red}) that depends on the said gradient (n_{grad}) of the controlled magnitude (nᵢₛₜ) and on the actual torque value (mᵢₛₜ), and a subtraction stage (12) for the determination of a derived torque (mᵥₒᵣₕ) from the difference between the reduction torque (m_{red}) and the actual torque (mᵢₛₜ) is in active connection with the regulator (13) in order to generate the nominal torque value (m_{vorg}) as a function of the derived torque (mᵥₒᵣₕ).

2. Device for limiting the driving speed of engine-powered motor vehicles, with a regulator (13) which generates a nominal torque value (m_{vorg}) for the engine of the motor vehicle as a controlling magnitude that depends on the difference between an actual speed value as the controlled magnitude and a limiting speed value or limiting speed function, **characterised in that** the regulator (13) is provided with means (10 - 12) for generating the nominal torque value (m_{vorg}) for the engine of the motor vehicle as the controlling magnitude, means (11) being provided for determining a reduction torque (m_{red}) that depends on the gradient (n_{grad}) of the controlled magnitude (nᵢₛₜ) and on the actual torque value (mᵢₛₜ), and a subtraction stage (12) for the determination of a derived torque (mᵥₒᵣₕ) from the difference between the reduction torque (m_{red}) and the actual torque (mᵢₛₜ) is in active connection with the regulator (13) in order to generate the nominal torque value (m_{vorg}) as a function of the derived torque (mᵥₒᵣₕ).

3. Device according to Claims 1 or 2, **characterised in that** a performance characteristic is provided for the determination of the reduction torque (m_{red}).

4. Device according to any of the preceding claims, **characterised in that** a limiting function stage (14) is provided for the determination of the engine speed limiting function (n_{maxeff}) when the actual engine speed (nᵢₛₜ) exceeds a maximum continuous speed (n_{dauer}).

5. Device according to Claim 4, **characterised in that** the limiting function stage (14) comprises a timer to specify a maximum engine speed (nₘₐₓ) that is higher than the maximum continuous speed (n_{dauer}) for a specifiable time (t1), and a ramp generator is provided for the reduction of the said maximum speed (nₘₐₓ) to the maximum continuous speed (n_{dauer}) after the lapse of the said specifiable time (t1).

6. Device according to Claims 4 or 5, **characterised in that** the engine speed limiting function (n_{maxeff}) is determined as an adjustment speed.

7. Device according to any of Claims 4 to 6, **characterised in that** a subtraction stage (15) is provided to determine the difference (n_{diff}) between the speed limiting function (n_{maxeff}) or the limiting speed and the actual speed (nᵢₛₜ), and this difference (n_{diff}) can be transmitted to the regulator (13).

8. Device according to any of the preceding claims, **characterised in that** a logic stage (18) is provided for the determination of a derived value that depends on the gradient (n_{grad}) of the controlled magnitude (nᵢₛₜ) and on the limiting speed or the limiting speed function (n_{maxeff}), and a first comparison stage (20) activates the regulator (13) when the controlled magnitude (nᵢₛₜ) exceeds this derived value (nᵥₒᵣₕ) and/or deactivates the regulator when it is less than the said value.

9. Device according to Claim 8, **characterised in that** the logic stage (18) comprises at least a second comparison stage (23), which deactivates the regulator (13) when the controlled magnitude (nᵢₛₜ) falls below a value (n_{grenz}) which is smaller than the derived value (nᵥₒᵣₕ).

10. Device according to any of the preceding claims, **characterised in that** the regulator (13) is formed essentially as a PI-regulator.

11. Device according to any of the preceding claims, **characterised in that** the nominal engine torque value (m_{vorg}) generated as the controlling magnitude is provided for the purpose of acting upon devices that control or regulate the supply of air and/or fuel to the engine.

12. Device according to Claim 11, **characterised in that** during such action the combustion processes take place essentially in stoichiometric proportions, i.e. with lambda = 1.

## Revendications

1. Dispositif pour limiter la vitesse de rotation de moteurs, comportant un régulateur (13), qui prédétermine une valeur de consigne (m_{vorg}) du couple pour le moteur en tant que grandeur de réglage, en fonction de la différence (n_{diff}) entre une valeur réelle (nᵢₛₜ) de la vitesse de rotation en tant que grandeur réglée et une valeur limite de la vitesse de rotation ou une fonction limite de la vitesse de rotation (n_{maxeff}), **caractérisé en ce que** le régulateur (13) est équipé de moyens (10 - 12) pour la prédétermination de la valeur de consigne du couple (m_{vorg}) en fonction du gradient (n_{grad}) de la grandeur réglée (nᵢₛₜ), que des moyens (11) sont prévus pour former un couple de réduction (m_{red}) en fonction du gradient (n_{grad}) de la grandeur réglée (nᵢₛₜ) et de la valeur réelle (mᵢₛₜ) du couple, et qu'un étage de soustraction (12) pour la formation d'un couple de dérivation (mᵥₒᵣₕ) à partir de la différence entre le couple de réduction (m_{red}) et la valeur réelle (mᵢₛₜ) du couple, et qu'un étage soustracteur (12) pour former un couple de dérivation (mᵥₒᵣₕ) à partir de la différence entre le couple de réduction (m_{red}) et la valeur réelle (mᵢₛₜ) du couple coopère avec le régulateur (13) pour la prédétermination de la valeur de consigne (m_{vorg}) du couple en fonction du couple de dérivation (mᵥₒᵣₕ).

2. Dispositif pour limiter la vitesse de véhicules automobiles mûs par un moteur, comportant un régulateur (13) qui prédétermine la valeur de consigne (m_{vorg}) du couple pour le moteur du véhicule automobile en tant que grandeur de réglage en fonction de la différence entre une valeur réelle de vitesse en tant que grandeur réglée et une valeur limite de vitesse ou une fonction limite de vitesse, **caractérisé en ce que** le régulateur (13) comprend des moyens (10 - 12) pour la prédétermination de la valeur de consigne (m_{vorg}) du couple pour le moteur du véhicule automobile en tant que grandeur réglée, que des moyens (11) sont prévus pour former un couple de réduction (m_{red}) en fonction du gradient (n_{grad}) de la grandeur réglée (nᵢₛₜ) et de la valeur réelle (mᵢₛₜ) du couple, et qu'un étage soustracteur (12) pour la formation d'un couple de dérivation (mᵥₒᵣₕ) à partir de la différence entre le couple de réduction (m_{red}) et la valeur réelle (mᵢₛₜ) du couple, coopère avec le régulateur (13) pour la prédétermination de la valeur de consigne (m_{vorg}) du couple en fonction du couple de dérivation (mᵥₒᵣₕ).

3. Dispositif selon la revendication 1 ou 2, **caractérisé en ce qu'**il est prévu un champ de caractéristique pour former le couple de réduction (m_{red}).

4. Dispositif selon l'une des revendications précédentes, **caractérisé en ce qu'**il est prévu un étage de fonction limite (14) pour former la fonction limite (n_{maxeff}) de la vitesse de rotation lorsque la valeur réelle (nᵢₛₜ) de la vitesse de rotation dépasse une vitesse de rotation durable maximale (n_{dauer}).

5. Dispositif selon la revendication 4, **caractérisé en ce que** l'état de fonction limite (14) comporte un circuit de minuterie pour prédéterminer une vitesse de rotation maximale (nₘₐₓ), qui est supérieure à la vitesse de rotation durable maximale (n_{dauer}), pour une durée (t1) pouvant être fixée, et qu'un générateur de signaux à rampe est prévu pour ramener la vitesse de rotation maximale (nₘₐₓ) à la vitesse de rotation du couple maximal (m_{dauer}) après l'écoulement de la durée (t1) pouvant être fixée.

6. Dispositif selon la revendication 4 ou 5, **caractérisé en ce que** la fonction limite de la vitesse de rotation (n_{maxeff}) est formée en tant que vitesse de rotation de régulation.

7. Dispositif selon l'une des revendications 4 à 6, **caractérisé en ce qu'**il est prévu un étage soustracteur (15) pour former la différence (n_{diff}) entre la fonction limite de vitesse de rotation (n_{maxeff}) ou la valeur limite de la vitesse de rotation et la valeur réelle (nᵢₛₜ) de la vitesse de rotation, cette différence (n_{diff}) pouvant être envoyée à une entrée du régulateur (13).

8. Dispositif selon l'une des revendications précédentes, **caractérisé en ce qu'**il est prévu un étage logique (18) pour former une valeur de dérivation en fonction du gradient (n_{grad}) de la grandeur réglée (nᵢₛₜ) et de la valeur limite ou de la fonction limite (n_{maxeff}), un premier étage comparateur (20) activant le régulateur (13) lorsque la grandeur de régulation (nᵢₛₜ) dépasse par le haut cette valeur de dérivation (nᵥₒᵣₕ) et/ou le désactivant dans le cas où cette grandeur de régulation tombe au-dessus de cette valeur de dérivation.

9. Dispositif selon la revendication 8, **caractérisé en ce que** l'étage logique (18) comporte au moins un second étage comparateur (23), qui désactive le régulateur (13) lorsque la grandeur réglée (nᵢₛₜ) tombe au-dessous d'une valeur (n_{grenz}) inférieure à la valeur de dérivation (nᵥₒᵣₕ).

10. Dispositif selon l'une des revendications précédentes, **caractérisé en ce que** le régulateur (13) est agencé essentiellement sous la forme d'un régulateur PI (à action proportionnelle et intégrale).

11. Dispositif selon l'une des revendications précédentes, **caractérisé en ce que** la valeur de consigne (m_{vorg}) du couple, prise en tant que grandeur de réglage, est prévue pour appliquer une action à des dispositifs pour la commande ou la régulation de l'apport d'air et/ou de carburant au moteur.

12. Dispositif selon la revendication 11, **caractérisé en ce que** lors de l'action, les processus de combustion s'effectuent essentiellement selon un rapport stoechiométrique, c'est-à-dire lambda = 1.
